# EUROPEAN PATENT APPLICATION

(11) **EP 3 171 253 A1**
(43) Date of publication of application: **24.05.2017**
(21) Application number: 16184997.1
(22) Date of filing: 19.08.2016
(51) Int. Cl.: G06F 3/038, G06F 3/0346

(54) **AIR MOUSE REMOTE CONTROLLER OPTIMIZATION METHOD AND APPARATUS, AIR MOUSE REMOTE CONTROLLER, COMPUTER PROGRAM AND RECORDING MEDIUM**

(30) Priority: 20.11.2015 CN 201510809884
(71) Applicant: Xiaomi Inc., Beijing 100085 (CN)
(72) Inventor: LIANG, Xin, Haidian District, Beijing 100085 (CN); TAN, Kangxi, Haidian District, Beijing 100085 (CN)
(74) Representative: Kudlek, Franz Thomas

(57) **Abstract**

The present invention is related to an air mouse remote controller optimization method and apparatus, an air mouse remote controller, a computer program and a recording medium. A movement sensor collects a movement trajectory of the air mouse remote controller. An air mouse module performs an air mouse function according to the movement trajectory and generates an air mouse control signal. A key assembly is a two-stage key having a microswitch. When detecting that the two-stage key is pressed to its first stage, a control module sends a selection instruction to a terminal device via a wireless communication module to fix a cursor at its current position. When detecting that the two-stage key is pressed to its second stage, the control module sends an operation instruction to the terminal device via the wireless communication module. By providing the two-stage switch, locking the cursor at a selected widget when a user presses the key to its first stage, and executing the widget when the key is pressed to its second stage, it can be ensured that a movement of the user s hand generated when the user presses an operational key will not cause a movement of the cursor on the interface, thereby improving the accuracy of key pressing operations of the air mouse remote controller.

## Description

### TECHNICAL FIELD

The present invention is related to smart devices, and more particularly, to an air mouse remote controller optimization method and apparatus, an air mouse remote controller, a computer program and a recording medium.

### BACKGROUND ART

With development of the smart household equipment industry, air mouse remote controllers are used more widely, and are replacing legacy remote controllers for controlling terminal devices such as smart TVs. A common air mouse remote controller uses a movement sensor to identify movement trajectories, and simulates a mapping operation method between a mouse and a cursor on a screen of a terminal device. With an operation interface on a screen mapped by moving an air mouse remote controller, a corresponding operation is selected via the cursor when a user presses a key. However, because some displacement of the user s hand will be generated when the user presses a key, a movement sensor will detect the movement of the hand, causing a change of a selected position of the cursor mapped on the screen as well. As a result, the accuracy of key pressing operations is low and the user experience is poor.

### SUMMARY

To overcome the above problem (namely, when a user presses a key, there will be generated some displacement of the user s hand, which will be detected by a movement sensor and cause a change of a selected position of a cursor mapped on a screen, thereby resulting in low accuracy of key pressing operations and poor user experience), this invention provides an air mouse remote controller optimization method and apparatus, an air mouse remote controller, a computer program and a recording medium.

According to a first aspect of the present invention, there is provided an air mouse remote controller, comprising a control module, an air mouse module, a movement sensor, a wireless communication module, a key assembly and a power module, wherein:
the movement sensor is connected to the air mouse module; the air mouse module, the wireless communication module, the key assembly and the power module are connected to the control module, respectively; the movement sensor is adapted to collect a movement trajectory of the air mouse remote controller; the air mouse module is adapted to perform an air mouse function according to the movement trajectory and to generate an air mouse control signal; the control module is adapted to send the air mouse control signal to a terminal device via the wireless communication module to control movement of a corresponding cursor;
the key assembly comprises a two-stage key having a microswitch; the control module being adapted to, when detecting that the two-stage key is pressed to its first stage, to send a selection instruction to the terminal device via the wireless communication module to fix the cursor at its current position; and when detecting that the two-stage key is pressed to its second stage, to send an operation instruction to the terminal device via the wireless communication module such that the terminal device executes an operation corresponding to the position of the cursor.

Optionally, the movement sensor is a gyro.

Optionally, the wireless communication module comprise at least one of a Bluetooth communication unit, an infrared communication unit and a 2.4GHz wireless communication unit.

Further, the air mouse remote controller also comprises: a housing inside which the control module, the air mouse module, the movement sensor, the wireless communication module and the power module are disposed, wherein the key assembly is disposed on an outer side of the housing.

Optionally, the air mouse remote controller also comprises an indication lamp disposed on the housing and connected to the power module.

The above embodiment of the present invention provides a novel air mouse remote controller. In addition to the control module, the air mouse module and so forth, the key is provided as a two-stage key. When the two-stage key is pressed by a user to its first stage, the wireless communication module sends a selection instruction to cause the terminal device to fix a position of the cursor. When the two-stage key is pressed to its second stage afterwards, movement of the user s hand will not cause movement of the cursor, and a widget selected by the cursor will be executed. As such, movement of the user s hand is reduced when pressing a key, and the accuracy of key pressing operations and the user experience are improved.

According to a second aspect of the present invention, there is provided an air mouse remote controller optimization method, applied to the air mouse remote controller according to the first aspect of the present invention and comprising:
when detecting that the two-stage key is pressed to its first stage, sending the selection instruction to the terminal device such that the terminal device locks the cursor at its position;
when detecting that the two-stage key is pressed to its second stage, sending the operation instruction to the terminal device such that the terminal device executes an operation corresponding to a widget at the position where the cursor is locked.

Optionally, the method also comprises: when detecting that the pressing of the two-stage key to its first stage is cancelled, sending a selection cancellation instruction to the terminal device such that the terminal device cancels the locking of the cursor corresponding to the air mouse remote controller.

The above embodiment is based on the air mouse remote controller according to the first aspect of the present invention. By detecting a state of the key, different control instructions may be sent to the terminal device according to different states. To be specific, when the user presses the two-stage key to its first stage, a selection instruction is sent to cause the terminal device to lock the position of the cursor; and when the two-stage key is pressed to its second stage, an operation instruction is sent. As such, a distance moved by the cursor due to movement of the user s hand when operating the key is reduced, and the accuracy of widget selection is improved.

According to a third aspect of the present invention, there is provided an air mouse remote controller optimization method, comprising:
receiving a selection instruction sent by an air mouse remote controller;
locking a cursor corresponding to the air mouse remote controller at its current position on an operation interface according to a selection instruction; and
executing an operation corresponding to a widget at the current position where the cursor is locked, when receiving an operation instruction sent by the air mouse remote controller.

Optionally, the method also comprises: cancelling the locking of the cursor, when receiving a locking cancellation instruction sent by the air mouse remote controller.

The technical solution according to this embodiment could be performed by a terminal device. The improved air mouse remote controller differs from existing air mouse remote controllers in that instructions are sent twice before operation is executed. Thus, the corresponding terminal device needs to receive instructions twice. After the selection instruction is received, the cursor is locked at a position on an operation interface. If an operation instruction is received afterwards, an operation corresponding to a widget at the position of the cursor is executed. If a locking cancellation instruction is received, the locking of the cursor is cancelled, so that the cursor can continue to move, thereby improving the user experience.

According to a fourth aspect of the present invention, there is provided an air mouse remote controller optimization apparatus, comprising:
a receiving module adapted to receive a selection instruction sent by an air mouse remote controller; and
a processing module adapted to lock a cursor corresponding to the air mouse remote controller at its current position on an operation interface according to a selection instruction, and to execute an operation corresponding to a widget at the current position where the cursor is locked when the receiving module receives an operation instruction sent by the air mouse remote controller.

Optionally, the processing module is also adapted to cancel the locking of the cursor when the receiving module receives a locking cancellation instruction sent by the air mouse remote controller.

In one particular embodiment, the steps of the air mouse remote controller optimization method are determined by computer program instructions.

Consequently, according to a fifth aspect, the invention is also directed to a computer program for executing the steps of an air mouse remote controller optimization method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The optimization apparatus of this embodiment is equivalent to a terminal device. The improved air mouse remote controller requires the receiving module to receive instructions twice. After receiving the selection instruction, the cursor is locked at a position on an operation interface. If an operation instruction is received afterwards, an operation corresponding to a widget at the position of the cursor is executed by the processing module. If a locking cancellation instruction is received, the locking of the cursor is cancelled by the processing module, so that the cursor can continue to move. By providing a two-stage key to the air mouse remote controller, inaccurate cursor selection due to movement of the user s hand during an operating process by the user is avoided, and the selection accuracy of the air mouse remote controller is improved, thereby improving the user experience.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
FIG. 1 is a schematic view of a structure of an air mouse remote controller according to an exemplary embodiment;
FIG. 2 is a flow chart showing an air mouse remote controller optimization method according to a first exemplary embodiment;
FIG. 3 is a flow chart showing an air mouse remote controller optimization method according to a second exemplary embodiment;
FIG. 4 is a block diagram of an air mouse remote controller optimization apparatus according to an exemplary embodiment;
FIG. 5 is a block diagram of a terminal device according to an exemplary embodiment; and
FIG. 6 is a block diagram of a terminal device 800 according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

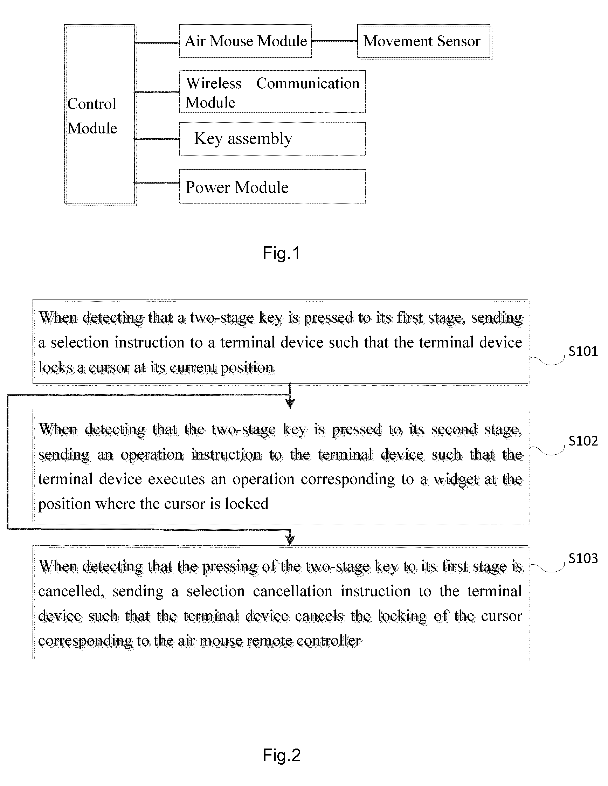

FIG. 1 is a schematic view of a structure of an air mouse remote controller according to an exemplary embodiment. As shown in FIG. 1, the air mouse remote controller comprises: a control module, an air mouse module, a movement sensor, a wireless communication module, a key assembly and a power module. The power module supplies power to the control module and other components connected to the control module. It should be understood that any "module" disclosed in the application can be implemented using hardware components, software, or both.

The movement sensor is connected to the air mouse module. The air mouse module, the wireless communication module, the key assembly and the power module are connected to the control module, respectively. The movement sensor is configured to collect a movement trajectory of the air mouse remote controller. The air mouse module performs an air mouse function according to the movement trajectory and generates an air mouse control signal. The control module sends the air mouse control signal to a terminal device via the wireless communication module to control movement of a corresponding cursor.

The key assembly comprises a two-stage key having a microswitch. When detecting that the two-stage key is pressed to its first stage, the control module sends a selection instruction to the terminal device via the wireless communication module to fix the cursor at its current position. When detecting that the two-stage key is pressed to its second stage, the control module sends an operation instruction to the terminal device via the wireless communication module such that the terminal device executes an operation corresponding to the position of the cursor.

In the embodiment of this invention, the control module may be realized by a single chip or a general purpose processor in combination with the related applications. The movement sensor can be realized by a gyro. That is, in a specific implementation, the movement sensor is a gyro.

A gyro is an angular movement detecting device, which can measure a rotational angular speed around an axis and derive a rotational angle around the axis. Gyros are widely used due to their two basic features: fixed axis and precession, which are based on the principle of conservation of angular momentum. There are many types of gyros, including directional gyros, gyro compasses, gyro vertical instruments, gyro stabilizers, rate gyros, gyro stabilized platforms, gyro sensors, fiber optic gyros, laser gyros, Micro-Electro-Mechanical Systems (MEMS) gyros etc. Gyro sensors are positioning and control systems based on free spatial movement and gestures, and are already widely used in mobile or portable devices such as smart cell phones and smart TV remote controllers. A gyro sensor can be flung on an imaginary plane to move a cursor, draw circles around a link and click keys. Gyro sensors can expand game potentials and enhance user experience.

Further, the wireless communication module comprises at least one of a Bluetooth communication unit, an infrared communication unit and a 2.4GHz wireless communication unit.

To realize communication between the air mouse remote controller and the controlled terminal device, infrared signal transmission or Bluetooth transmission may be used. When Bluetooth transmission is used, a Bluetooth connection needs to be established between the air mouse remote controller and the terminal device. Or wireless communication at a dedicated 2.4GHz public frequency band may be used. The frequency conflicting probability at the 2.4GHz frequency band is much lower than that at the frequency band used by traditional remote controllers. In addition, as the linearity of electromagnetic waves of 2.4GHz is good, the antenna is short and can be used conveniently. Further, there are many usable frequency points for 2.4GHz remote controllers. The diffraction ability of radio waves of 2.4GHz is strong, and control can be maintained when such radio waves encounter obstacles.

In addition, in practical implementation, the air mouse remote controller further comprises: a housing inside which the control module, the air mouse module, the movement sensor, the wireless communication module and the power module are disposed, wherein the key assembly is disposed on an outer side of the housing. The confirmation key and/or other keys of the air mouse remote controller may be provided as two-stage keys having microswitches for users operations.

In addition, the air mouse remote controller further comprises: an indication lamp disposed on the housing and connected to the power module.

With the air mouse remote controller provided by the above embodiment of the present invention, in addition to the control module, the air mouse module and so forth, the key is provided as a two-stage key. When the two-stage key is pressed to its first stage by a user, the wireless communication module sends a selection instruction to cause the terminal device to fix a position of the cursor. When the two-stage key is pressed to its second stage afterwards, movement of the user s hand will not cause movement of the cursor, and a widget selected by the cursor will be executed. As such, movement of the user s hand is reduced when pressing a key, and the accuracy of key pressing operations and the user experience are improved.

FIG. 2 is a flow chart showing an air mouse remote controller optimization method according to a first exemplary embodiment. As shown in FIG. 2, the optimization method is applied to the air mouse remote controller shown in FIG. 1 and comprises the following steps:

Step S101: when detecting that the two-stage key is pressed to its first stage, sending the selection instruction to the terminal device such that the terminal device locks the cursor at its position.

In this step, the two-stage key of the air mouse remote controller may detect an operation magnitude of the user based on the user s operation thereon. The two-stage key is analogous to a two-stage shutter key of a camera. The key only needs to be slightly pressed to its first stage, so that a corresponding response message can be sent to the control module. The control module generates a selection instruction based on this message and sends the instruction to the remotely controlled terminal device through Bluetooth, a wireless network, near field communication, infrared transmission or the like.

The selection instruction is used to instruct the terminal device to lock the current position of the cursor, so that the terminal device can fix the cursor corresponding to the air mouse remote controller at the current position. In other words, before the pressing of the two-stage key to its first stage is cancelled, the cursor will not move along with movement of the air mouse remote controller.

Step S102: when detecting that the two-stage key is pressed to its second stage, sending the operation instruction to the terminal device such that the terminal device executes an operation corresponding to a widget at the position where the cursor is locked.

In this step, when it is further detected at air mouse remote controller side that the two-stage key is pressed to its second stage, it is deemed that the user wants to operate the currently selected widget. Similar to the above manner, the control module generates an operation instruction instructing the terminal device to execute the currently selected widget. In use of the two-stage key, a greater force is required for pressing the two-stage key to its second stage, and therefore displacement of the user s hand may be larger. By applying the proposed solution, it can be ensured that, when the two-stage key is pressed further to its second stage, the position of the cursor is fixed and the currently selected widget does not change.

Step S103: when detecting that the pressing of the two-stage key to its first stage is cancelled, sending a selection cancellation instruction to the terminal device such that the terminal device cancels the locking of the cursor corresponding to the air mouse remote controller.

The steps S103 and S102 may be performed in parallel, which means that: if the user presses the two-stage key to its first stage and presses the two-stage key to its second stage afterwards, S102 will be executed; and if the user presses the two-stage key to its first stage and cancels the pressing afterwards, S103 will be executed.

If the user releases the two-stage key which is pressed to its first stage, it is deemed that the user abandons the operation, and the control module generates a selection cancellation instruction and sends it to the terminal device such that the terminal device cancels the locking of the cursor. Afterwards, the cursor keeps moving on the operation interface of the terminal device according to the position of the air mouse remote controller, and selects a new widget based on the user s operations.

In addition, after S102 is executed, that is, after the widget on the terminal device is executed, it is not needed to lock the cursor. Instead, the locking is cancelled, so that the cursor keeps moving on the operation interface according to the movement of the air mouse remote controller.

The air mouse remote controller optimization method provided by this embodiment is based on the air mouse remote controller shown in FIG. 1. By detecting a state of the key, different control instructions may be sent to the terminal device according to different states. To be specific, when the user presses the two-stage key to its first stage, a selection instruction is sent to cause the terminal device to lock the position of the cursor; and when the two-stage key is pressed to its second stage, an operation instruction is sent. As such, a distance moved by the cursor due to movement of the user s hand when operating the key is reduced, and the accuracy of widget selection and the user experience are improved.

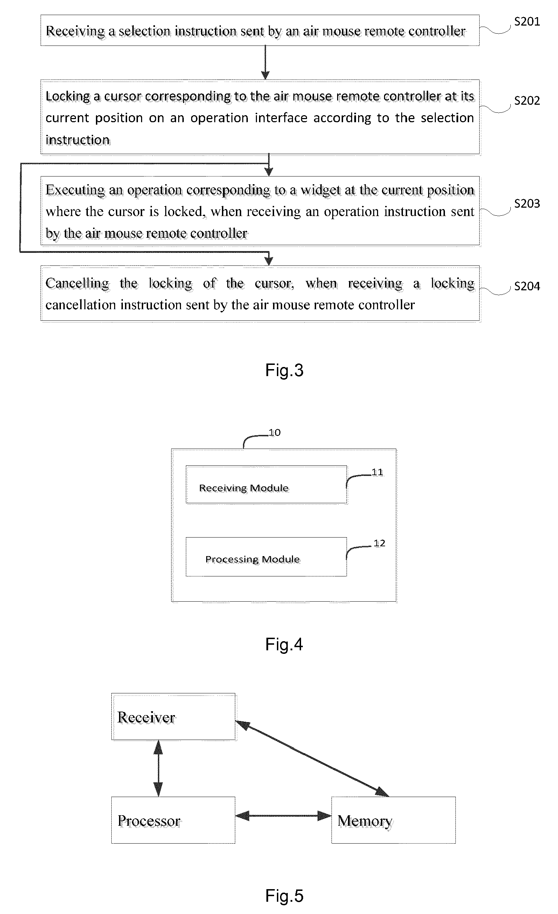

FIG. 3 is a flow chart showing an air mouse remote controller optimization method according to a second exemplary embodiment. As shown in FIG. 3, the optimization method is applied at a remotely controlled terminal device side such as a smart TV or a projector, and comprises the following steps:
Step S201: receiving a selection instruction sent by an air mouse remote controller;
Step S202: locking a cursor corresponding to the air mouse remote controller at its current position on an operation interface according to the selection instruction;
Step S203: executing an operation corresponding to a widget at the current position where the cursor is locked, when receiving an operation instruction sent by the air mouse remote controller.

Optionally, at step S204, the locking of the cursor is cancelled, when receiving a locking cancellation instruction sent by the air mouse remote controller.

In this solution, the terminal device may fix the position of the cursor on the operation interface after receiving a selection instruction sent by an air mouse remote controller, and executes a selected widget after receiving an operation instruction, or cancels the locking of the cursor after receiving a locking cancellation instruction.

In this solution, the steps S203 and S204 are implemented in parallel and one of them is executed according to the instruction type. In other words, the confirmation key of the air mouse remote controller is provided as a two-stage key having a microswitch; if the user presses the two-stage key to its first stage, the terminal device freezes the air mouse or movement of the air mouse cursor, so that the accuracy of the key pressing operations of the air mouse is improved significantly.

The air mouse remote controller optimization method of this embodiment is performed by the terminal device. The improved air mouse remote controller differs from existing air mouse remote controllers in that instructions are sent twice before operation is executed. Thus, the corresponding terminal device needs to receive instructions twice. After the selection instruction is received, the cursor is locked at a position on an operation interface. If an operation instruction is received afterwards, an operation corresponding to a widget at the position of the cursor is executed. If a locking cancellation instruction is received, the locking of the cursor is cancelled, so that the cursor can continue to move, thereby improving the user experience.

FIG. 4 is a block diagram of an air mouse remote controller optimization apparatus according to an exemplary embodiment. As shown in FIG. 4, the air mouse remote controller optimization apparatus 10 comprises:
a receiving module 11 configured to receive a selection instruction sent by an air mouse remote controller;
a processing module 12 configured to lock a cursor corresponding to the air mouse remote controller at its current position on an operation interface according to the selection instruction, and to execute an operation corresponding to a widget at the locked current position where the cursor is locked when the receiving module 11 receives an operation instruction sent by the air mouse remote controller.

Optionally, the processing module 12 is also configured to cancel the locking of the cursor when the receiving module 11 receives a locking cancellation instruction sent by the air mouse remote controller.

With respect to the air mouse remote controller optimization apparatus in the above embodiments, the specific manners for performing operations for individual modules therein have been described in detail in the embodiments regarding the steps shown in FIG. 3 and will not be elaborated herein.

The air mouse remote controller optimization apparatus provided by this embodiment is equivalent to a remotely controlled terminal device. The improved air mouse remote controller requires the receiving module to receive instructions twice. After receiving the selection instruction, the cursor is locked at a position on an operation interface. If an operation instruction is received afterwards, an operation corresponding to a widget at the position of the cursor is executed by the processing module. If a locking cancellation instruction is received, the locking of the cursor is cancelled by the processing module, so that the cursor can continue to move. By providing a two-stage key to the air mouse remote controller, inaccurate cursor selection due to movement of the user s hand during an operating process by the user is avoided, and the selection accuracy of the air mouse remote controller is improved, thereby improving the user experience.

The above describes the air mouse remote controller optimization apparatus, namely, the internal functional modules and the schematic structures of the terminal device. FIG. 5 is a block diagram of a physical implementation of a terminal device according to an exemplary embodiment. Referring to FIG. 5, the terminal device may be embodied as: a receiver configured to receive a message; a processor configured to control execution of executable instructions; and a memory configured to store instructions executable by the processor,
wherein the receiver is also configured to receive a selection instruction sent by an air mouse remote controller;
wherein the processor is also configured to lock a cursor corresponding to the air mouse remote controller at its current position on an operation interface according to the selection instruction, and execute an operation corresponding to a widget at the current position where the cursor is locked when the receiver receives an operation instruction sent by the air mouse remote controller.

The processor is also configured to cancel the locking of the cursor when the receiver receives a locking cancellation instruction sent by the air mouse remote controller.

It should be understood that, in the embodiments of the above terminal device, the processor may be a central processing unit (CPU), a general purpose processor, a digital signal processor (DSP), an application specific integrated circuit (ASIC) or the like. The general purpose processor may be a microprocessor or any one of a conventional processor. The memory may be a read-only memory ROM, a random access memory RAM, a flash memory, a hard disc or a solid-state hard disc. The steps of the methods disclosed by the embodiments of this invention may be executed by a hardware processor or by a combination of hardware and software modules of the processor.

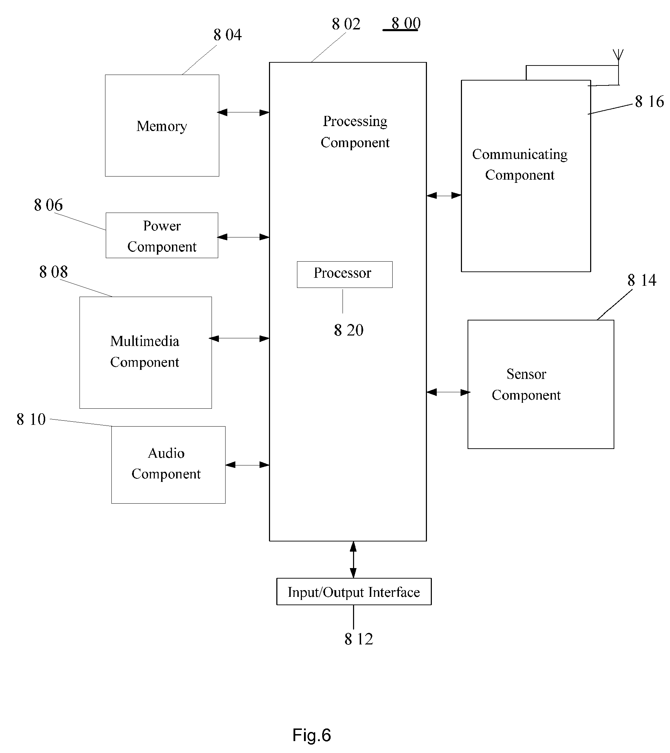

FIG. 6 is a block diagram of a terminal device 800 according to an exemplary embodiment. For example, the terminal device 800 may be provided as a smart terminal, a smart TV, a projector, a computer, a digital broadcasting device, a messaging device, a game console, a tablet, a medical device, a fitness equipment, a personal digital assistant or the like.

Referring to FIG. 6, the terminal device 800 may further comprise one or more of the following components: a processing component 802, a memory 804, a power supply component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power supply management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

The exemplary embodiments also provides a non-volatile computer-readable storage medium containing instructions, such as the memory 804 containing instructions which may be executed by the processing component 820 of the terminal device 800 to perform the above methods. For example, the non-volatile computer-readable storage medium may be a ROM, a RAM, a CD-ROM, a tape, a floppy disc, an optical data storage device or the like.

There is provided a non-transitory computer-readable storage medium having instructions stored therein which, when executed by a processor of a mobile terminal, cause the mobile terminal to perform an air mouse remote controller optimization method, the method comprising:
receiving a selection instruction sent by an air mouse remote controller;
locking a cursor corresponding to the air mouse remote controller at its current position on an operation interface according to the selection instruction; and
executing an operation corresponding to a widget at the current position where the cursor is locked, when receiving an operation instruction sent by the air mouse remote controller.

Optionally, the method also comprises: cancelling the locking of the cursor when receiving a locking cancellation instruction sent by the air mouse remote controller.

Although features and elements are described above in particular combinations, one of ordinary skill in the art will appreciate that each feature or element may be used alone, or in any combination with the other feature and elements if no contradiction exists. Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An air mouse remote controller, **characterized by** comprising a control module, an air mouse module, a movement sensor, a wireless communication module, a key assembly and a power module, wherein:
the movement sensor is connected to the air mouse module; the air mouse module, the wireless communication module, the key assembly and the power module are connected to the control module, respectively; the movement sensor is adapted to collect a movement trajectory of the air mouse remote controller; the air mouse module is adapted to perform an air mouse function according to the movement trajectory and to generate an air mouse control signal; the control module is adapted to send the air mouse control signal to a terminal device via the wireless communication module to control movement of a corresponding cursor;
the key assembly comprises a two-stage key having a microswitch; the control module being adapted to, when detecting that the two-stage key is pressed to its first stage, to send a selection instruction to the terminal device via the wireless communication module to fix the cursor at its current position; and when detecting that the two-stage key is pressed to its second stage, to send an operation instruction to the terminal device via the wireless communication module such that the terminal device executes an operation corresponding to the position of the cursor.

2. The air mouse remote controller according to claim 1, **characterized in that** the movement sensor is a gyro.

3. The air mouse remote controller according to claim 1 or 2, **characterized in that** the wireless communication module comprises at least one of a Bluetooth communication unit, an infrared communication unit and a 2.4GHz wireless communication unit.

4. The air mouse remote controller according to any one of claims 1 to 3, **characterized by** further comprising a housing inside which the control module, the air mouse module, the movement sensor, the wireless communication module and the power module are disposed, wherein the key assembly is disposed on an outer side of the housing.

5. The air mouse remote controller according to claim 4, **characterized by** further comprising an indication lamp disposed on the housing and connected to the power module.

6. An air mouse remote controller optimization method, **characterized in that** the method is applied to the air mouse remote controller according to any one of claims 1-5 and comprises:
when detecting that the two-stage key is pressed to its first stage, sending the selection instruction to the terminal device such that the terminal device locks the cursor at its position;
when detecting that the two-stage key is pressed to its second stage, sending the operation instruction to the terminal device such that the terminal device executes an operation corresponding to a widget at the position where the cursor is locked.

7. The method according to claim 6, **characterized by** further comprising:
when detecting that the pressing of the two-stage key to its first stage is cancelled, sending a selection cancellation instruction to the terminal device such that the terminal device cancels the locking of the cursor corresponding to the air mouse remote controller.

8. An air mouse remote controller optimization method, **characterized by** comprising:
receiving a selection instruction sent by an air mouse remote controller;
locking a cursor corresponding to the air mouse remote controller at its current position on an operation interface, according to a selection instruction;
executing an operation corresponding to a widget at the current position where the cursor is locked, when receiving an operation instruction sent by the air mouse remote controller.

9. The method according to claim 8, **characterized by** further comprising: cancelling the locking of the cursor, when receiving a locking cancellation instruction sent by the air mouse remote controller.

10. An air mouse remote controller optimization apparatus, **characterized by** comprising:
a receiving module configured to receive a selection instruction sent by an air mouse remote controller;
a processing module configured to:
lock a cursor corresponding to the air mouse remote controller at its current position on an operation interface, according to a selection instruction, and
execute an operation corresponding to a widget at the current position where the cursor is locked, when the receiving module receives an operation instruction sent by the air mouse remote controller.

11. The apparatus according to claim 10, **characterized in that** the processing module is also configured to cancel the locking of the cursor when the receiving module receives a locking cancellation instruction sent by the air mouse remote controller.

12. A computer program including instructions for executing the steps of an air mouse remote controller optimization method according to claim 6 or 7, when said program is executed by a computer.

13. A recording medium readable by a computer and having recorded thereon a computer program including instructions for executing the steps of an air mouse remote controller optimization method according to claim 6 or 7.

14. A computer program including instructions for executing the steps of an air mouse remote controller optimization method according to claim 8 or 9, when said program is executed by a computer.

15. A recording medium readable by a computer and having recorded thereon a computer program including instructions for executing the steps of an air mouse remote controller optimization method according to claim 8 or 9.
